(19) **Europäisches Patentamt**
**European Patent Office**
**Office européen des brevets**

(11) **EP 1 307 761 B1**

(12) **EUROPÄISCHE PATENTSCHRIFT**

(45) Veröffentlichungstag und Bekanntmachung des Hinweises auf die Patenterteilung:
**25.11.2009   Patentblatt 2009/48**

(51) Int Cl.:
**G01S 3/802** (2006.01)

(21) Anmeldenummer: **00949041.8**

(86) Internationale Anmeldenummer:
**PCT/CH2000/000430**

(22) Anmeldetag: **11.08.2000**

(87) Internationale Veröffentlichungsnummer:
**WO 2000/068703 (16.11.2000 Gazette 2000/46)**

(54) **VERFAHREN ZUR RICHTUNGSORTUNG UND ORTUNGSANORDNUNG**

METHOD FOR LOCALISING DIRECTION AND LOCALISATION ARRANGEMENT

PROCEDE DE LOCALISATION DE DIRECTION ET DISPOSITIF DE LOCALISATION

(84) Benannte Vertragsstaaten:
**CH DE DK FR GB IT LI**

(43) Veröffentlichungstag der Anmeldung:
**07.05.2003   Patentblatt 2003/19**

(73) Patentinhaber: **PHONAK AG**
**8712 Stäfa (CH)**

(72) Erfinder: **ROECK, Hans-Ueli**
**CH-8634 Hombrechtikon (CH)**

(74) Vertreter: **Troesch Scheidegger Werner AG**
**Schwäntenmos 14**
**8126 Zumikon (CH)**

(56) Entgegenhaltungen:
**WO-A-00/33634      US-A- 4 639 733**
**US-A- 5 248 985      US-A- 5 289 544**

## Beschreibung

Die vorliegende Erfindung betrifft ein Verfahren zur Richtungsortung einer elektromagnetischen oder akustischen Signalquelle nach dem Oberbegriff von Anspruch 1 sowie eine Anordnung hierfür nach demjenigen von Anspruch 6.

Die zur vorliegenden Erfindung führenden Erkenntnisse wurden aufgrund von Bedürfnissen betreffs der Richtungsortung akustischer Quellen erarbeitet. Demzufolge wird sich auch die vorliegende Beschreibung der Erfindung weitestgehend auf die Richtungsortung akustischer Quellen richten. Nichtsdestotrotz erkennt der Fachmann aber zwanglos, dass sich die vorliegende Erfindung, erweiternd, ohne weiteres eignet, elektromagnetische Signalquellen zu orten. Die Frage, welcher Art die zu ortenden Quellen sind, hat lediglich Einfluss auf die Art der erfindungsgemäss eingesetzten Sensoren. Im speziellen Fall der Ortung akustischer Signalquellen handelt es sich bei der Sensoranordnung um eine Anordnung von Mikrophonen, bei der Ortung elektromagnetischer Quellen um eine Anordnung von Antennen mit nachgeschalteten Antennenverstärkern.

Für die Ortung derartiger Quellen, insbesondere in einem Umfeld, in welchem gleichzeitig mehrere Quellen wirksam sind, sind heute mathematisch oder apparatetechnisch aufwendige Vorgehensweisen bekannt. Wird dabei der apparatetechnische Aufwand reduziert durch Reduktion der vorgesehenen Anzahl von Sensoren, steigt hierfür der mathematisch zu treibende Aufwand für die Diskriminierung der Quellenortung. Bei der Ortung akustischer Signalquellen wird hierbei beispielsweise auf die Ermittlung von Phasenunterschieden zwischen gleichzeitig auf die Mikrophone der Mikrophonanordnung auftreffenden akustischen Signale abgestellt.

WO 00/33634 realisiert eine Mikrophonanordnung mit praktisch in eine Richtung fokussierter Empfangscharakteristik um zwischen mehreren Quellen zu diskriminieren. US 4639733 und US 5248985 weisen bekannte Verfahren zur Richtungsortung von elektromagnetischen Signalquellen auf.

Es ist Aufgabe der vorliegenden Erfindung, ein Richtungsortungsverfahren sowie eine entsprechende Anordnung vorzuschlagen, mittels welcher der erwähnte Aufwand drastisch reduziert wird.

Ausgehend von einem Verfahren eingangs genannter Art wird dies durch dessen Realisation nach dem Kennzeichen von Anspruch 1 erreicht.

Ist eine Sensoranordnung vorgesehen mit mindestens zwei elektrischen Ausgängen, wobei zwischen elektromagnetischem oder akustischem Eingang und den erwähnten mindestens zwei elektrischen Ausgängen, im Sinne von Empfangskeulen, unterschiedliche Übertragungscharakteristiken wirksam sind betreffs Abhängigkeit der elektrischen Ausgangssignale von der Einfallsrichtung der Eingangssignale, so wurde erkannt, dass durch Quotientenbildung an Signalen, die die erwähnten Ausgangssignale repräsentieren, eine Quotienten-Funktion gebildet wird, welche für einen Ortungswinkel einer Quelle eindeutig ist und die vom Signalpegel unabhängig ist. Damit wird in der Minimalkonfiguration der vorgeschlagenen Vorgehens ein Ortungswinkel eindeutig ermittelt, und es ist dieses Vorgehen, welches die Basis dafür legt, zwei Ortungswinkel pro Quelle zu ermitteln und die Quellenortung somit im Raum eindeutig im Sinne eines Ortungs-Strahles zu eruieren und/oder bei mehreren gleichzeitig wirksamen Quellen diese mindestens im Rahmen des erwähnten einen Ortungswinkels zu orten. Direkt ergibt aus der erwähnten Quotientenbildung, wie noch zu erläutern sein wird, für die Quellenortung ein Ortungs-Kegel, dessen Öffnungswinkel als eine Ortungskoordinate ermittelt wird.

Eine eindeutige Richtungsortung einer Quelle, d.h. Ortung eines Ortsstrahles für die Quelle, wird möglich durch die Auswertung mindestens dreier der erwähnten Quotienten, wozu, wie in einer bevorzugten Ausführungsform realisiert, mindestens drei der elektrischen Ausgänge vorgesehen sind, denen jeweils unterschiedliche Übertragungsfunktionen obgenannter Art, d.h. im Sinne unterschiedlicher Empfangscharakteristiken, zugeordnet sind.

Wird das bisher besprochene Vorgehen an einer Umgebung eingesetzt mit nur einer einzigen aktiven Signalquelle, so wird diese geortet. Sind aber gleichzeitig mehrer Signalquellen wirksam, so ergibt sich ein eigentliches Ortungswinkelspektrum, und es kann aus einer einzigen Messung nicht ohne weiteres ermittelt werden, wie viele Quellen aus welcher Ortungsrichtung wirksam sind.

Zu diesem Zweck wird in einer weiteren bevorzugten Ausführungsform vorgeschlagen, dass man die erwähnte Quotientenbildung zeitgestaffelt mehrmals vornimmt, mit den Quotienten-Resultaten eine Histogramm-Funktion erstellt, diese mit den vorab bestimmten Quotienten/Einfallsrichtungs-Abhängigkeiten korreliert und daraus die Ortungsrichtung der mindestens einen Quelle ermittelt.

Dieses Vorgehen wird bevorzugterweise sowohl bei der Realisation des erfindungsgemässen Vorgehens mit mindestens zwei wie auch bei derjenigen mit mindestens drei der erwähnten Ausgänge eingesetzt.

An der vorgeschlagenen Histogrammfunktion führen von länger wirksamen Quellen erzeugte elektromagnetische oder akustische Signale zu gleichen Quotientenwerten, was sich in einer Häufung dieser Werte in der realisierten Histogrammfunktion niederschlägt. Diese gehäuften Werte führen, korreliert mit der erwähnten vorab bestimmten Quotienten/Einfallsrichtungs-Abhängigkeit, direkt zur Ermittlung des jeweiligen mindestens einen Ortungswinkels der im Feld wirksamen Signalquellen.

In einer weiteren bevorzugten Ausführungsform werden die Ausgangssignale der erwähnten Sensoranordnungen im Frequenzbereich ausgewertet. Berücksichtigt man nämlich, dass sich die erwähnten Übertragungscharakteristiken mit der Signalfrequenz lediglich im Rahmen des Roll-offs verändern, so ist ersichtlich, dass sich der Frequenzeinfluss bei der Quotientenbildung aufhebt, insbesondere dann, wenn als Übertragungscharakteristiken Charakteristiken gewählt werden, welche gleiches Roll-off-Verhalten aufweisen. Die Signalauswertung im Frequenzbereich ergibt mithin nicht nur die Möglichkeit, das erwähnte Histogramm aus zeitgestaffelten Messungen zu erstellen, sondern auch aus den gleichzeitig im Frequenzbereich ermittelten, spektralen Quotientenresultaten.

Bevorzugterweise werden den jeweiligen elektrischen Ausgängen zugeordnete Übertragungscharakteristiken gewählt, welche sich lediglich durch eine Raumwinkelphasenverschiebung unterscheiden, also in andere Richtung "blicken", aber sonst identisch sind.

Eine erfindungsgemässe Anordnung obgenannter Art zeichnet sich nach dem Kennzeichen von Anspruch 6 aus, mit bevorzugten Ausführungsformen gemäss den Ansprüchen 7 bis 10. Das erfindungsgemässe Verfahren und die erfindungsgemässe Anordnung eignen sich insbesondere auch für die Ortung akustischer Quellen und, aufgrund des apparatetechnisch und rechenleistungsmässig geringen erforderlichen Aufwandes, insbesondere für die Implementierung an Hörgeräten.

Die Erfindung wird anschliessend beispielsweise anhand von Figuren erläutert. Diese zeigen:

Fig. 1a, 1b     bevorzugterweise erfindungsgemäss ausgenützte Übertragungscharakteristiken für die Ortung akustischer Quellen bei, in Minimalkonfiguration, vorgesehenen zwei Submikrophonanordnungen;

Fig. 1c     die gemeinsame Raumorientierung der Submikrophonanordnungs-Übertragungscharakteristiken gemäss den Fig. 1a und 1b;

Fig. 2     über dem einen Raumwinkel φ, gemäss den Fig. 1a bis 1b, den Betrag der jeweiligen Übertragungscharakteristik sowie der Quotientenfunktion;

Fig. 3     über dem Raumwinkel φ, vergrössert, die Quotientenfunktion nach Fig. 2 zur Erläuterung der Korrelation von IST-Wertmessung und vorbekannter Abhängigkeit zwischen Quotient und Winkel φ;

Fig. 4     als Beispiel, eine Histogrammfunktion, gebildet anhand zeitgestaffelt ermittelter Quotientenresultate;

Fig. 5     anhand eines vereinfachten Signalfluss/Funktionsblockdiagrammes, eine erfindungsgemäss ausgebildete und nach dem erfindungsgemässen Verfahren arbeitende Ortungsanordnung für akustische Signalquellen, in bevorzugter Ausführungsform;

Fig. 6a     den Ortungsort für eine Signalquelle, wie er mit erfindungsgemässem Vorgehen bzw. erfindungsgemässer Anordnung in Minimalkonfiguration ermittelt wird;

Fig. 6b     zwei Ortungsstrahlen, wie sie in einer Weiterausbildung der Erfindung ermittelt werden, und

Fig. 6c     die Ermittlung des einen Ortungsstrahles, wie er in einer weiteren bevorzugten Ausbildungsform der Erfindung ermittelt wird.

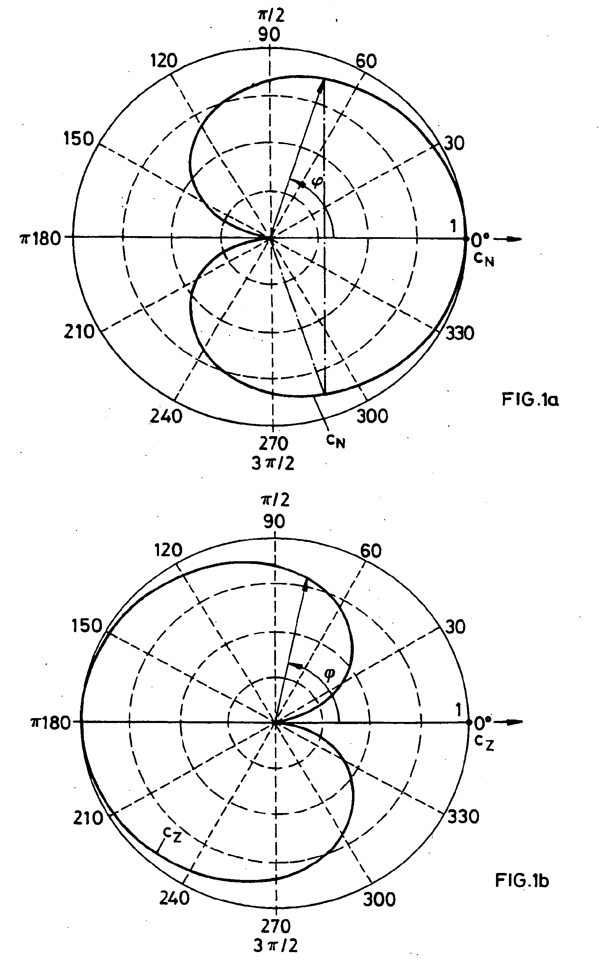

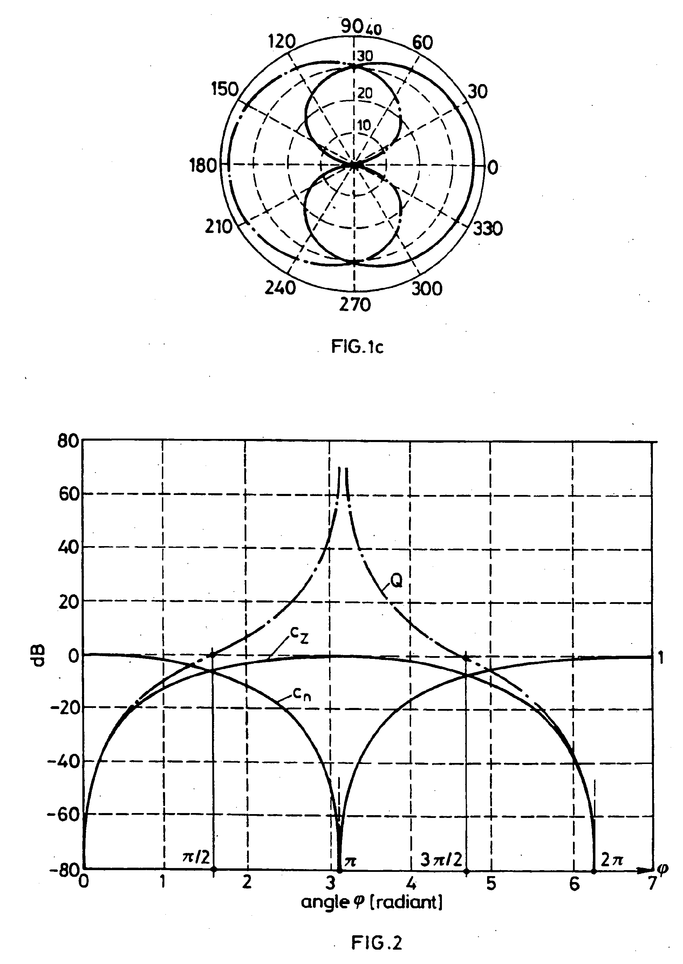

Mit den Figuren 1 bis 4 soll das erfindungsgemässe Vorgehen ohne Anspruch auf wissenschaftliche Exaktheit anhand von einfachen Übertragungscharakteristiken dargestellt werden, entsprechend je Kardeoiden erster Ordnung. Anhand dieses nachfolgend beschriebenen übersichtlichen und einfachen Vorgehens wird dem Fachmann die Anleitung gegeben, wie erfindungsgemäss, auch ausgehend von komplexeren Übertragungsfunktionen, eine oder mehrere akustische Quellen erfindungsgemäss geortet werden können.

Eine erste Submikrophonanordnung - generell Sensoranordnung - einer vorgesehenen Mikrophonanordnung bzw. Sensoranordnung weise als Übertragungs- bzw. Verstärkungscharakteristik bezüglich Richtung φ auf sie einfallender Signale die in Fig. 1a zweidimensional dargestellte, dreidimensionale Übertragungscharakteristik auf.

In Fig. 1b ist, in Darstellung analog zu Fig. 1a, die Übertragungscharakteristik einer zweiten Sensoranordnung dargestellt, welche bezüglich der Achse $\pi/2$; $3\pi/2$ spiegelbildlich zur Übertragungscharakteristik der ersten Sensoranordnung sei. Die Übertragungscharakteristik gemäss Fig. 1a sei mit $c_N$, diejenigen gemäss Fig. 1b mit $c_Z$ bezeichnet. In Fig. 1c ist gleichzeitig die Übertragungscharakteristik $c_N$ und $c_Z$ eingetragen, wie sie sich bezüglich der Übertragungsfunktionen an einer Sensoranordnung mit entsprechend zwei Subsensoranordnungen und zwei elektrischen Ausgängen präsentieren. Wie erwähnt handelt es sich, für die Ortung akustischer Quellen, bei den Anordnungen um Mikrophonanordnungen.

In Fig. 2 ist über der Winkel achse φ gemäss den Fig. 1a bis 1c der Betrag der Übertragungscharakteristiken $c_N$ bzw. $c_Z$ in dB dargestellt.

Bei auf die beiden Subsensoranordnungen eintreffenden Einheitssignalen entsprechen die in den Figuren 1a und 1b dargestellten Übertragungscharakteristiken gleichzeitig den jeweiligen Signalwerten ausgangsseitig der betrachteten Sensoranordnung. Erfindungsgemäss wird nun aus diesen beiden Ausgangssignalwerten, welche ebenfalls mit $c_N$ bzw. $c_Z$ bezeichnet seien, der Betragsquotient gebildet, nämlich

$$Q = \frac{|C_N|}{|C_Z|} \, .$$

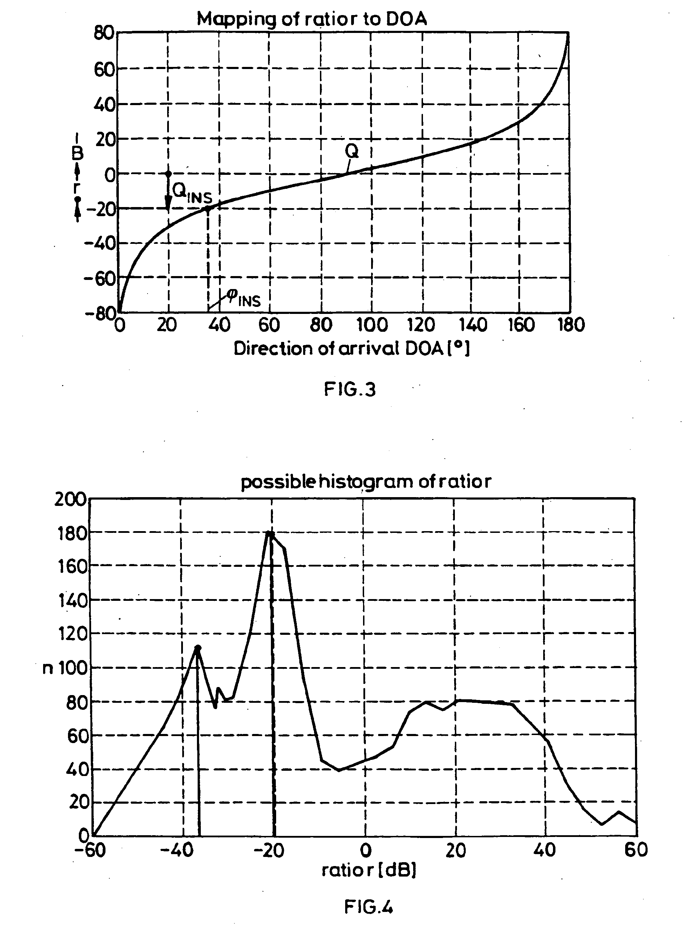

Es ergibt sich bei dieser Quotientenbildung die in Fig. 2 strichpunktiert qualitativ dargestellte Funktion Q mit einer Polstelle bei $\varphi = \pi$. In Fig. 3 ist die Quotientenfunktion $Q(\varphi)$ zwischen $\varphi = 0$ und $\varphi = \pi$ nochmals aufgetragen.

Es ist zu beachten, dass bei der Quotientenbildung Q, die vorerst aus Übersichtsgründen aufgrund von Einheitssignalen erläutert wurde, sich die jeweiligen Betragswerte der Eingangssignale wegdividieren, so dass die in Fig. 3 dargestellte Winkelabhängigkeit für beliebige unter $\varphi$ auf die Sensoranordnung auftreffende Signale gilt.

Wird nun diese Funktion ausgemessen und abgespeichert und, wie in Fig. 3 schematisch dargestellt, von einem momentan auftreffenden Signal INS die momentane Quotientenfunktion $Q_{INS}$ gebildet, wiederum in dB dargestellt, so kann der gefundene dB-Wert mit der abgespeicherten Quotientenfunktion $Q(\varphi)$ korreliert werden, d.h. mit dem gefundenen Quotientenwert in die vorab gespeicherte Funktion bzw. Abhängigkeit $Q(\varphi)$ eingegangen werden: Es wird die Ortungsrichtung $\varphi_{INS}$ des momentan auftreffenden akustischen Signals ermittelt.

Wie sich aus Betrachtung von Fig. 3 und beispielsweise der Figuren 1a und 1b ohne weiteres ergibt, ist die Quotientenfunktion $Q(\varphi)$ von 0 bis 180° eindeutig, dies jedoch lediglich in der in den Figuren 1a und 1b dargestellten zweidimensionalen Schnittebene durch die räumlichen Übertragungsfunktionen. Es wird ein Ortungswinkel $\varphi$ gefunden, entsprechend einem Ortungskegel, der in Fig. 1a für den dort eingetragenen Öffnungswinkel $\varphi$ strichpunktiert eingetragen ist.

Will man die Ortung eindeutig realisieren, so sind mindestens drei der erwähnten Subsensoranordnungen vorzusehen und entsprechend eine Sensoranordnung mit drei Ausgängen. Die Quotientenbildung, wie sie beschrieben wurde, sowie die Korrelation mit den jeweilig voraufgezeichneten Abhängigkeiten $Q(\varphi)$ erfolgt paarweise an zwei, vorzugsweise drei der drei Anordnungsausgangssignale.

Obwohl die bis anhin ermittelte Ortungsinformation aussagt, dass momentan ein akustisches Signal aus der erwähnten Ortungsrichtung, sei dies bei zwei Subsensoranordnungen entsprechend einem Ortungskegel, sei dies bei mehr als zwei Sensoranordnungen räumlich durch zwei oder einen Ortungsstrahl festgelegt, ergibt sich daraus nur, dass momentan ein akustisches Signal aus der erwähnten Richtung auftrifft. Momentan ist somit eine geortete akustische Signalquelle wirksam.

Um jedoch Aussagen über die Ortung einer über längere Zeit wirksamen akustischen Quelle im Unterschied zu aus verschiedenen Richtungen auftreffenden, stochastisch verteilten akustischen Signalen machen zu können, wird nun grundsätzlich über die Zeit beobachtet, aus welcher Ortungsrichtung gehäuft Signale auftreffen, die Folgerung erlaubend, dass dort eine akustische Signalquelle lokalisiert ist.

Hierzu wird von den Ausgangssignalen wiederholt der erwähnte Quotient $Q_{INS}$ gebildet und damit, wie in Fig. 4 als Beispiel dargestellt, ein Histogramm gebildet. Hierzu werden Quotientwert-spezifisch (gemäss Fig. 4 in dB) die Häufigkeiten aufgetragen. Fig. 4 zeigt dabei ein Beispiel eines so aufgenommenen Histogramms mit der Häufigkeit n aufgetretener Quotientenwerte. Es lässt sich daraus entnehmen, dass entsprechend der Häufung bei ca. -38 dB sowie -20 dB gemäss Fig. 3 eine akustische Quelle in Richtung $\varphi \cong 15°$ und eine bei $\varphi \cong 35°$ wirksam ist.

Das vorgeschlagene Vorgehen eignet sich dabei ausgezeichnet, um im Frequenzbereich realisiert zu werden. Berücksichtigt man dabei, dass sich die Übertragungscharakteristiken wie beispielsweise gemäss Fig. 1a und 1b aufgrund des Frequenz-Roll-offs jeweils frequenzabhängig gleichermassen verändern, so ist ersichtlich, dass die erwähnte Quotientenfunktion frequenzunabhängig wird. Damit können die Ausgangssignale der Sensoranordnung hintereinander mehrmals in den Frequenzbereich gewandelt werden und es kann die erwähnte Quotientenbildung, die frequenzunabhängig dieselbe Richtungsinformation beinhaltet, für eine ausgewählte Anzahl spektraler Amplitudenwerte am Frequenzspektrum vorgenommen werden.

Mit dem vorgeschlagenen Verfahren wird es möglich, mit einer Anzahl N von Subsensor-, insbesondere Mikrophonanordnungen eine gegebenenfalls wesentlich grössere Anzahl M von Signalquellen, insbesondere akustischen, zu orten. Werden dabei mehr als zwei Subsensoranordnungen eingesetzt, ergibt sich die Möglichkeit, die Ortung im Raum eindeutig vorzunehmen. Aus der Verteilung von Fig. 4 ergibt sich beispielsweise auch, dass im Ortungswinkelbereich zwischen 110° und 130° mit hoher Wahrscheinlichkeit zwei oder mehr etwa gleiche Quellen wirksam sind.

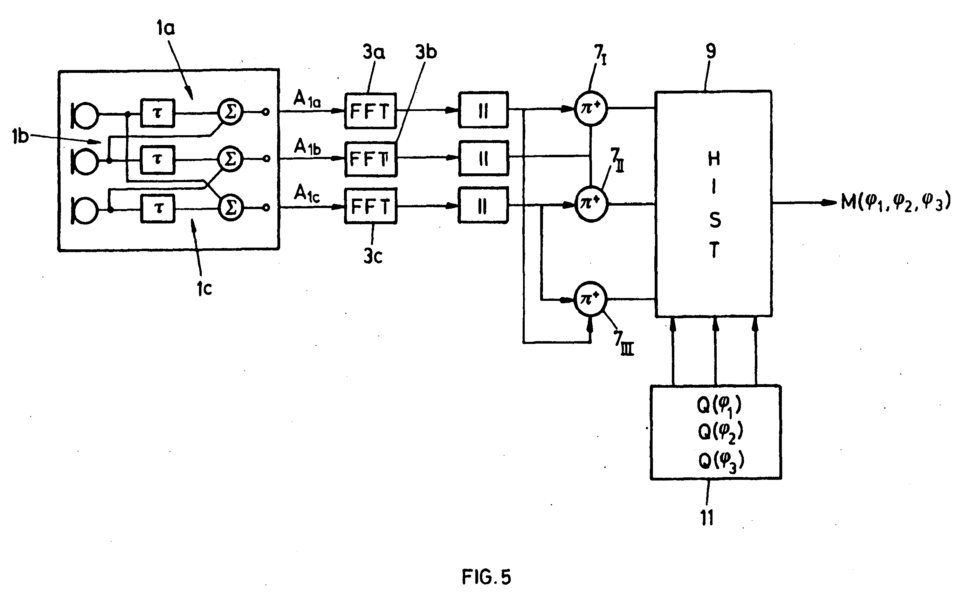

In Fig. 5 ist anhand eines vereinfachten Signalfluss/Funktionsblockdiagrammes eine nach dem erfindungsgemässen Verfahren arbeitende Ortungsanordnung am Beispiel einer Ortungsanordnung für akustische Signale dargestellt. Sie ist insbesondere auch für den Einsatz an einem Hörgerät geeignet.

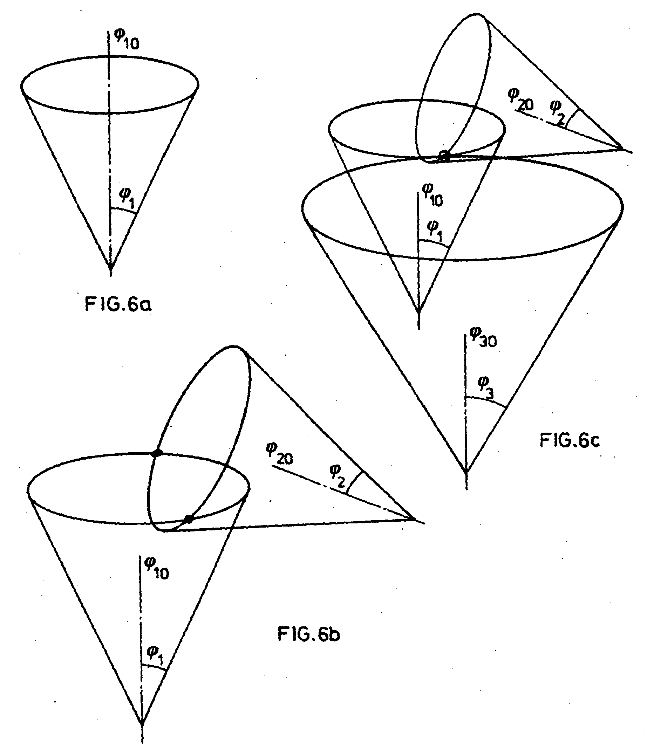

Die erfindungsgemässe Anordnung umfasst eine Mikrophonanordnung 1 mit mindestens zwei Submikrophonanordnungen $1_x$, wie dargestellt vorzugsweise mit drei Submikrophonanordnungen 1b - 1c, die je auf entsprechende Ausgänge $A_{1a}$ bis $A_{1c}$ geführt sind. Die drei Submikrophonanordnungen weisen unterschiedliche Übertragungscharakteristiken auf, z.B. entsprechend Kardoiden erster Ordnung, die in unterschiedliche Richtungen gerichtet sind, was beispielsweise und bevorzugterweise durch Aufbau der Submikrophonanordnungen mit zwei Mikrophonen realisiert wird, deren Ausgänge nach der Technik "Delay and add" miteinander verkoppelt sind. Mit dem Vorsehen der drei Submikrophonanordnungen wird ein drittes Kardoid realisiert, womit ermöglicht ist, gleichzeitig und wie noch erläutert werden wird zwei oder drei Quotienten zu bilden. Damit werden zwei Ortungskegel gemäss Fig. 6b ermittelt oder drei Ortungskegel gemäss Fig. 6c. Mit zwei Ortungskegeln ist jeweils eine Quelle noch "zwei"-deutig, mit drei ist sie eindeutig lokalisiert.

In bevorzugter Ausführungsform werden die Ausgangssignale $A_{xy}$ an Zeitbereich/Frequenzbereich-Wandlereinheiten FFT 3a bis 3c in den Frequenzbereich gewandelt. Die Ausgänge der Zeitbereich/Frequenzbereich-Wandlereinheiten 3a bis 3c sind paarweise, beispielsweise wie dargestellt jeweils über Betragsbildungseinheiten mit Zähler- bzw. Nennereingängen von drei Quotientenbildungseinheiten $7_I$ bis $7_{III}$ wirkverbunden. Die Ausgänge der Quotientenbildungseinheiten $7_I$ bis $7_{III}$ sind mit einer Auswerteeinheit 9 wirkverbunden, woran, wie erläutert wurde, insbesondere die Histogramme gebildet werden. Um die Korrelation der gefundenen Quotientenwertverteilung mit der Quotienten/Ortungswinkelabhängigkeit zu realisieren, werden weiter, wie in Fig. 5 schematisch dargestellt, der Auswerteeinheit 9 die Abhängigkeiten $Q(\varphi_1)$ bis

$Q(\varphi_3)$ zugeführt. Diese Abhängigkeiten wurden vorgängig anhand der im gegebenen Fall vorgesehenen Sensoranordnung 1 ausgemessen bzw. berechnet und sind, schematisiert, in der Funktionsspeichereinheit 11 abgespeichert. Dabei bezeichnen $\varphi_1$ bis $\varphi_3$ die Ortungskegelöffnungswinkel gemäss den Figuren 6a bis 6c. Durch entsprechende Umrechnung in der Auswerteeinheit 9, d.h. Auswertung der Histogramm-Verteilung und Zuordnung ihrer Spitzenwerte an die entsprechenden Ortungswinkel $\varphi_1$ bis $\varphi_3$, dann entsprechende Umrechnung je nach erwünschten Ortungskoordinaten, wird ausgangsseitig der Auswerteeinheit 9 die Anzahl detektierter akustischer Quellen M mit ihren Ortungswinkeln, ausgegeben.

Das vorgeschlagene Vorgehen eignet sich ausgezeichnet zur Implementierung in Hörgeräten und kann Basis dafür bilden, die Richtcharakteristik eines Hörgeräte auf erkannte Quellen zu richten, oder - werden diese als Störquellen definiert oder befunden - in der erwähnten Lokalisierungsrichtung eine hohe Übertragungscharakteristiks-Dämpfung zu realisieren.

Als Submikrophonanordnungen bzw. Subsensoranordnungen können grundsätzlich alle bekannten Mikrophone bzw. Sensoren und deren Kombinationen eingesetzt werden, die wie gefordert in Einsatzposition und wie gefordert bezüglich Einfallsrichtung $\varphi$ auftreffender akustischer Signale unterschiedliche Übertragungscharakteristiken aufweisen.

Insbesondere für eine einfache und überblickbare Realisation wird aber vorgeschlagen, identische Subsensoranordnungen einzusetzen, deren Übertragungscharakteristiken wohl identisch, aber bezüglich axialer Ausrichtung (in Fig. 1a entsprechend $\varphi = 0$) räumlich unterschiedlich gerichtet sind.

Mit dem erfindungsgemässen Vorgehen wird es möglich, ohne Bestimmung von Signalphasen bzw. Signalzeitverzögerungen und ohne Einsatz entsprechend aufwendiger Logarithmierung komplexer Variabler, höchst einfach durch Quotientenbildung und anschliessende einfache Auswertung im Umfeld Signalquellen zu orten, insbesondere im akustischen Umfeld akustische Quellen.

## Patentansprüche

1.   Verfahren zur Richtungsortung einer elektromagnetischen oder akustischen Signalquelle bezüglich einer Sensoranordnung (1a-1c) mit mindestens zwei elektrischen Ausgängen ($A_{xy}$), wobei die einfallsrichtungsabhängigen Übertragungsfunktionen zwischen eingangsseitig auf die Sensoranordnung einfallenden akustischen Signalen und elektrischen Ausgangssignalen an den beiden elektrischen Ausgängen ($A_{xy}$) unterschiedlich sind, und wobei von Signalen, die die Ausgangssignale der Sensoranordnung repräsentieren, ein Quotient ($Q_{INS}$) gebildet wird und aus Korrelation des Quotientenresultates mit der vorab bestimmten Abhängigkeit des Quotienten ($Q(\varphi)$) von der Einfallsrichtung ($\varphi$) mindestens eine Ortungsrichtung der Quelle bestimmt wird.

2.   Verfahren nach Anspruch 1, **dadurch gekennzeichnet, dass** die Sensoranordnung mindestens drei der Ausgänge aufweist und die Quotientenbildung und Korrelation an Signalen vorgenommen wird, die für die elektrischen Signale an mindestens zwei, vorzugsweise an drei Paaren der mindestens drei elektrischen Ausgänge repräsentativ sind.

3.   Verfahren nach einem der Ansprüche 1 oder 2, **dadurch gekennzeichnet, dass** man die Quotientenbildung mehrmals vornimmt, mit den Resultaten eine Histogramm-Funktion erstellt, diese mit der vorab bestimmten Quotienten/Einfallsrichtungs-Abhängigkeit korreliert und daraus die Ortungsrichtung der mindestens einen Quelle ermittelt.

4.   Verfahren nach einem der Ansprüche 1 bis 3, **dadurch gekennzeichnet, dass** man die Signale am Ausgang der Sensoranordnung im Frequenzbereich der Quotientenbildung zuführt.

5.   Verfahren nach einem der Ansprüche 1 bis 4, **dadurch gekennzeichnet, dass** man Übertragungscharakteristiken realisiert, die unterschiedliche räumliche Bezugswinkel definieren, diesbezüglich aber mindestens genähert identisch sind.

6.   Anordnung zur Richtungsortung elektromagnetischer oder akustischer Signalquellen mit einer Sensoranordnung (1) mit mindestens zwei elektrischen Ausgängen ($A_{xy}$), wobei die Sensoranordnung zwischen einfallenden elektromagnetischen oder akustischen Signalen und den Ausgängen ($A_{xy}$) unterschiedliche Übertragungsfunktionen bezüglich Einfallsrichtung der Signale aufweist, wobei mindestens eine Quotientenbildungseinheit (7) mit den mindestens zwei Ausgängen ($A_{xy}$) der Sensoranordnung (1) wirkverbunden ist, welche ausgangsseitig mit mindestens einem Eingang einer Auswerteeinheit (9) wirkverbunden ist, an deren Ausgang aus korrelation des Quotientenresultates mit der vorab bestimmten Abhängigkeit des Quotienten von der Einfallsrichtung ein mindestens eine Ortungsrichtung ($\varphi_1$) der Quelle identifizierendes Signal (M) erzeugt wird.

**7.** Anordnung nach Anspruch 6, **dadurch gekennzeichnet, dass** die Sensoranordnung (1) mindestens drei der Ausgänge ($A_{xy}$) aufweist und dass paarweise diese Ausgänge mit mindestens zwei, vorzugsweise mit drei Quotientenbildungseinheiten ($Q_I$ - $Q_{III}$) wirkverbunden sind.

**8.** Anordnung nach einem der Ansprüche 6 oder 7, **dadurch gekennzeichnet, dass** den Ausgängen ($A_{xy}$) der Sensoranordnung (1) und den Eingängen der Quotientenbildungseinheit (Q) eine Zeit/Frequenzbereich-Wandlereinheit (3) zwischengeschaltet ist.

**9.** Verwendung des Verfahrens nach einem der Ansprüche 1 bis 5 oder der Anordnung nach einem der Ansprüche 6 bis 8 für die Ortung akustischer Quellen.

**10.** Verwendung nach Anspruch 9 an Hörgeräten.


**Claims**

**1.** Method for directionally locating a source of electromagnetic or acoustic signals with respect to a sensor arrangement (1a-1c) with at least two electrical outputs (Axy), the transfer functions, dependent on the direction of incidence, between acoustic signals incident on the input side of the sensor arrangement and electrical output signals at the two electrical outputs (Axy) being different, and a quotient ($Q_{INS}$) being formed from signals which represent the output signals of the sensor arrangement and at least one locating direction of the source being determined from correlation of the quotient result with the previously determined dependence of the quotient ($Q(\varphi)$) on the direction of incidence ($\varphi$).

**2.** Method according to Claim 1, **characterized in that** the sensor arrangement comprises at least three of the outputs, and the quotient-forming and correlation is performed on signals which are representative of the electrical signals at at least two, preferably at three, pairs of the at least three electrical outputs.

**3.** Method according to Claim 1 or 2, **characterized in that** the quotient-forming is performed several times and the results are used to create a histogram function, and said histogram function is correlated with the previously determined quotient/direction-of-incidence dependence, and from this, the locating direction of the at least one source is determined.

**4.** Method according to one of Claims 1 to 3, **characterized in that** the signals at the output of the sensor arrangement are fed to the quotient forming in the frequency domain.

**5.** Method according to one of Claims 1 to 4, **characterized in that** transmission characteristics are realized which define different spatial reference angles, but which are in this respect at least approximately identical.

**6.** Arrangement for directionally locating sources of electromagnetic or acoustic signals, with a sensor arrangement (1) with at least two electrical outputs ($A_{xy}$), the sensor arrangement having different transfer functions with respect to the direction of incidence of the signals between incident electromagnetic or acoustic signals and the outputs ($A_{xy}$), at least one quotient-forming unit (7) being operationally connected to the at least two outputs ($A_{xy}$) of the sensor arrangement (1) and operationally connected on its output side to at least one input of an evaluation unit (9), at the output of which a signal (M) identifying at least one locating direction ($\varphi_1$) of the source is generated from correlation of the quotient result with the previously determined dependence of the quotient on the direction of incidence.

**7.** Arrangement according to Claim 6, **characterized in that** the sensor arrangement (1) has at least three of the outputs ($A_{xy}$) and **in that** these outputs are operationally connected in pairs to at least two, preferably to three, quotient-forming units ($Q_I$ - $Q_{III}$).

**8.** Arrangement according to one of Claims 6 and 7, **characterized in that** a time/frequency-domain converter unit (3) is interconnected between the outputs ($A_{xy}$) of the sensor arrangement (1) and the inputs of the quotient-forming unit (Q).

**9.** Use of the method according to one of Claims 1 to 5 or the arrangement according to one of Claims 6 to 8 for the locating of acoustic sources.

**10.** Use according to Claim 9 at hearing devices.

**Revendications**

1. Procédé de localisation de direction d'une source de signaux électromagnétiques ou acoustiques relativement à un agencement de capteur (1a-1c) avec au moins deux sorties électriques (Axy), où les fonctions de transmission dépendant de la direction d'incidence entre des signaux acoustiques incidents, côté entrée, à l'agencement de capteur et des signaux de sortie électriques aux deux sorties électriques (Axy) sont différentes, et où est formé par des signaux, qui représentent les signaux de sortie de l'agencement de capteur, un quotient ($Q_{INS}$), et à partir de la corrélation du résultat de quotient avec la dépendance déterminée préalablement du quotient ($Q(\varphi)$) de la direction d'incidence ($\varphi$) au moins une direction de localisation de la source est déterminée.

2. Procédé selon la revendication 1, **caractérisé en ce que** l'agencement de capteur présente au moins trois des sorties, et la formation de quotient et la corrélation est effectuée à des signaux qui sont représentatifs des signaux électriques à au moins deux, de préférence à trois paires et au moins trois sorties électriques.

3. Procédé selon l'une des revendications 1 ou 2, **caractérisé en ce qu'**on procède à la formation de quotient à plusieurs reprises, qu'on établit avec les résultats une fonction d'histogramme, qu'on met en corrélation celle-ci avec la dépendance quotient/direction d'incidence déterminée préalablement et qu'on détermine à partir de celle-ci la direction de localisation de la au moins une source.

4. Procédé selon l'une des revendications 1 à 3, **caractérisé en ce qu'**on achemine les signaux à la sortie de l'agencement de capteur dans la plage de fréquence de la formation de quotient.

5. Procédé selon l'une des revendications 1 à 4, **caractérisé en ce qu'**on réalise des caractéristiques de transmission qui définissent des angles de référence spatiaux différents, qui sont cependant au moins approximativement identiques à ceux-ci.

6. Agencement pour la localisation de direction de sources de signaux électromagnétiques ou acoustiques avec un agencement de capteur (1) avec au moins deux sorties électriques ($A_{xy}$), où l'agencement de capteur présente entre des signaux électromagnétiques ou acoustiques incidents et les sorties ($A_{xy}$) des fonctions de transmission différentes se rapportant à la direction d'incidence des signaux, où au moins une unité de formation de quotient (7) est reliée fonctionnellement à au moins deux sorties précitées ($A_{xy}$) de l'agencement de capteur (1), qui est relié fonctionnellement, côté sortie, à au moins une entrée d'une unité d'évaluation (9), à la sortie de laquelle, à partir de la corrélation du résultat de quotient avec la dépendance déterminée préalablement du quotient de la direction d'incidence, est produit au moins un signal (M) identifiant une direction de localisation ($\varphi_1$) de la source.

7. Agencement selon la revendication 6, **caractérisé en ce que** l'agencement de capteur (1) présente au moins trois des sorties ($A_{xy}$), et **en ce que**, par paires, ces sorties sont reliées fonctionnellement à au moins deux, de préférence à trois unités de formation de quotient ($Q_I$ - $Q_{III}$).

8. Agencement selon l'une des revendications 6 ou 7, **caractérisé en ce qu'**il est commuté entre les sorties ($A_{xy}$) de l'agencement de capteur (1) et les entrées de l'unité de formation de quotient (Q) une unité de conversion de temps/plage de fréquence (3).

9. Utilisation du procédé selon l'une des revendications 1 à 5 ou de l'agencement selon l'une des revendications 6 à 8 pour la localisation de sources acoustiques.

10. Utilisation selon la revendication 9 à des appareils auditifs.

FIG.1a

FIG.1b

FIG.1c

FIG.2

FIG.3

FIG.4

FIG.5

FIG.6a

FIG.6b

FIG.6c

**EP 1 307 761 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0033634 A
- US 4639733 A
- US 5248985 A